# EUROPEAN PATENT SPECIFICATION

(11) **EP 4 148 400 B1**
(45) Date of publication and mention of the grant of the patent: **20.11.2024**
(21) Application number: 22195285.6
(22) Date of filing: 13.09.2022
(51) Int. Cl.: G01G 11/12

(54) **WEIGHING APPARATUS**
WÄGEAPPARAT
APPAREIL DE PESAGE

(30) Priority: 14.09.2021 JP 2021149553
(43) Date of publication of application: 15.03.2023
(73) Proprietor: ISHIDA CO., Ltd., Kyoto-shi, Kyoto 606-8392 (JP)
(72) Inventor: TARUMOTO, Yoshinori, Shiga, 520-3026 (JP); SHIOTANI, Heinosuke, Shiga, 520-3026 (JP)
(74) Representative: Gill Jennings & Every LLP

(56) References cited:
- JP-A- 2008 296 175

## Description

### BACKGROUND

### Technical Field

The present invention relates to a weighing apparatus.

### Related Art

Weighing apparatus are known which, as in patent document 1 (JP-A No. 2020-148589) for example, convey an article and measure the weight of the article as it is being conveyed.

In such weighing apparatus, sometimes defects occur in the weighing due, for example, to degradation of constituent devices over time. Because there are multiple factors that give rise to defects, it usually requires a long amount of time to identify the cause. To address this, patent document 1 (JP-A No. 2020-148589) discloses acquiring a weigh signal output by a detection unit when a conveyance unit is driven in a state in which there is no article on the conveyance unit in regard to a single conveyance speed, calculating variance per vibration component, and identifying the defective area of a rotational component based on the calculation result.

JP2008296175A discloses an article inspection apparatus capable of accurately adjusting a carry-in interval of an inspection object.

### SUMMARY

### Technical Problem

However, because there are numerous factors that give rise to defects in the weighing, the method of patent document 1 (JP-ANo. 2020-148589) sometimes has difficulty accurately inferring the factor from among various defect factors.

It is an object of the present invention to provide a weighing apparatus that conveys an article and weighs the article as it is being conveyed, the weighing apparatus being able to accurately infer defect factors.

### Solution to Problem

A weighing apparatus of a first aspect measures the weight of an article while conveying the article. The weighing apparatus includes a conveyance unit that conveys the article, a detection unit, and a control unit. The conveyance unit has a variable conveyance speed. The detection unit is configured to detect the weight of the conveyance unit or, in a case where the conveyance unit is conveying the article, the weight of the conveyance unit and the weight of the article on the conveyance unit and outputs a weigh signal. The control unit is configured to generate statistical information from the weigh signals output by the detection unit in a state in which there is no article on the conveyance unit in regard to each of plural conveyance speeds. The control unit is configured to determine and output candidates for defect factors based on the statistical information for each of the conveyance speeds.

In the weighing apparatus of the first aspect, as candidates for defect factors are determined based on the statistical information obtained in regard to the plural conveyance speeds, candidates for defect factors can be accurately inferred in a case where a defect is occurring in the weighing. For that reason, a worker maintaining the weighing apparatus can eliminate the defect in a short amount of time.

A weighing apparatus of a second aspect is the weighing apparatus of the first aspect, wherein the statistical information generated by the control unit include statistical information generated from the weigh signal output from the detection unit in a state in which there is no article on the conveyance unit in a case where the conveyance speed is zero.

In the weighing apparatus of the second aspect, candidates for defect factors in the weighing apparatus are determined based on the statistical information obtained in a case where the conveyance speed is zero, that is, while the conveyance unit is stopped. Therefore, candidates for defect factors can be inferred particularly accurately in a case where a defect is occurring in the weighing. For that reason, a worker maintaining the weighing apparatus can eliminate the defect in a short amount of time.

A weighing apparatus of a third aspect is the weighing apparatus of the second aspect, wherein the defect factors include at least one of defect factors relating to the installation state of the weighing apparatus and defect factors relating to the installation environment of the weighing apparatus.

In the weighing apparatus of the third aspect, the potential for not only defects in constituent parts of the weighing apparatus but also other types of defects can be detected, and the amount of time a worker maintaining the weighing apparatus needs to identify the cause of a defect can be shortened.

A weighing apparatus of a fourth aspect is the weighing apparatus of any of the first aspect to the third aspect, wherein the control unit has plural filters with mutually different characteristics which are configured to be used to filter the weigh signals. The control unit is configured to generate the statistical information from signals obtained by filtering, with each of the plural filters, the weigh signal output by the detection unit in a state in which there is no article on the conveyance unit in regard to each of the plural conveyance speeds. The control unit is configured to determine and output the candidates for defect factors based on the statistical information for each of the conveyance speeds and for each of the filters.

In the weighing apparatus of the fourth aspect, as candidates for defect factors are determined using the statistical information obtained from signals obtained by processing signals with different filters, candidates for defect factors can be accurately inferred in a case where a defect is occurring in the weighing. For that reason, a worker maintaining the weighing apparatus can eliminate the defect in a short amount of time.

A weighing apparatus of a fifth aspect is the weighing apparatus of the fourth aspect and further includes a storage unit. In the storage unit, standards for the statistical information are stored for each of the conveyance speeds and for each of the filters. The control unit is configured to determine and output the candidates for defect factors based on results of a comparison of the generated statistical information for each of the conveyance speeds and for each of the filters with the standards for the corresponding conveyance speeds and filters stored in the storage unit.

In the weighing apparatus of the fifth aspect, candidates for defect factors can be accurately inferred by comparing the generated statistical information with the standards.

A weighing apparatus of a sixth aspect is the weighing apparatus of the fifth aspect, wherein the statistical information generated from signals obtained by filtering, with each of the plural filters, the weigh signals output by the detection unit in a state in which there is no article on the conveyance unit in regard to each of the plural conveyance speeds at the time of a test operation of the weighing apparatus are stored as the standards in the storage unit.

In the weighing apparatus of the sixth aspect, the statistical information obtained at the time of a test operation of the weighing apparatus are used as the standards, so candidates for defect factors can be inferred based on characteristics unique to each weighing apparatus.

A weighing apparatus of a seventh aspect is the weighing apparatus of any of the first aspect to the sixth aspect, wherein the statistical information includes at least one of standard deviation, dispersion, a difference between a maximum value and a minimum value, a maximum value, and a minimum value.

### Advantageous Effects of Invention

In the weighing apparatus of the present invention, as candidates for defect factors are determined based on the statistical information obtained in regard to the plural conveyance speeds, candidates for defect factors can be accurately inferred in a case where a defect is occurring in the weighing. For that reason, a worker maintaining the weighing apparatus can eliminate the defect in a short amount of time.

### BRIEF DESCRIPTION OF THE DRAWINGS

FIG. 1 is a schematic front view of a weighing apparatus pertaining to an embodiment of the invention seen from the front;
FIG. 2 is a block diagram of the weighing apparatus of FIG. 1;
FIG. 3 is a schematic plan view of main parts of the weighing apparatus of FIG. 1 seen from above;
FIG. 4 is a schematic configuration diagram of a second conveyor of a conveyance device and a detection device of the weighing apparatus of FIG. 1;
FIG. 5 is a block diagram of a configuration of a control device of the weighing apparatus of FIG. 1 for a weight calculation process;
FIG. 6 is a diagram schematically showing a weigh signal of a load cell of the weighing apparatus of FIG. 1 and the weigh signal after being filtered;
FIG. 7A is an example of a flowchart of a diagnostic process performed by the control device of the weighing apparatus of FIG. 1;
FIG. 7B is another example of a flowchart of a diagnostic process performed by the control device of the weighing apparatus of FIG. 1;
FIG. 8A is a diagram showing an abnormal trend appearing in filtered signals in a case where there is a defect relating to the installation environment of the weighing apparatus and/or a case where there is a defect in the installation state of the weighing apparatus;
FIG. 8B is a diagram showing normal and abnormal trends appearing in filtered signals in a case where there is a problem in a second conveyor belt of the second conveyor; and
FIG. 8C is a diagram showing normal and abnormal trends appearing in filtered signals in a case where there is a problem in rollers of the second conveyor.

### DETAILED DESCRIPTION

A weighing apparatus 100 pertaining to an embodiment of the weighing apparatus of the invention will be described with reference to the drawings.

### (1) Overall Configuration

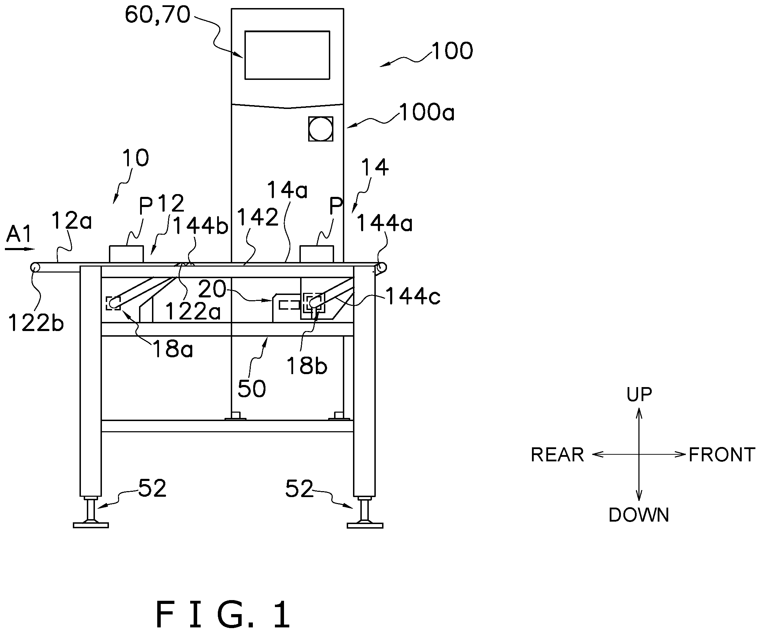

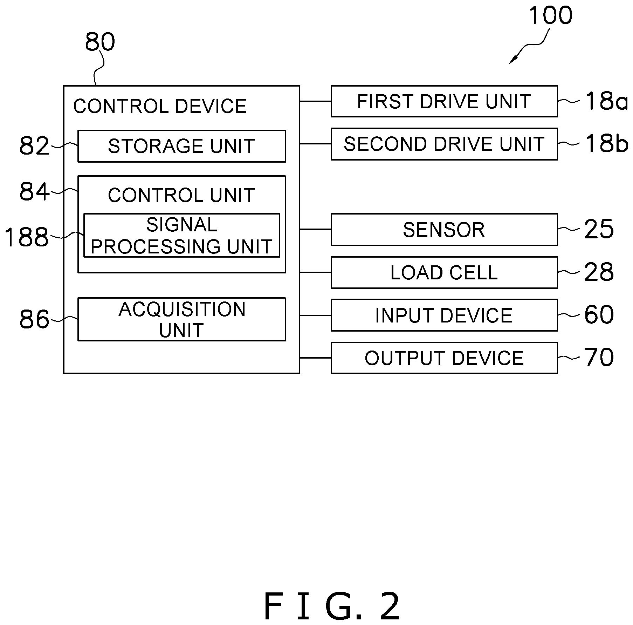

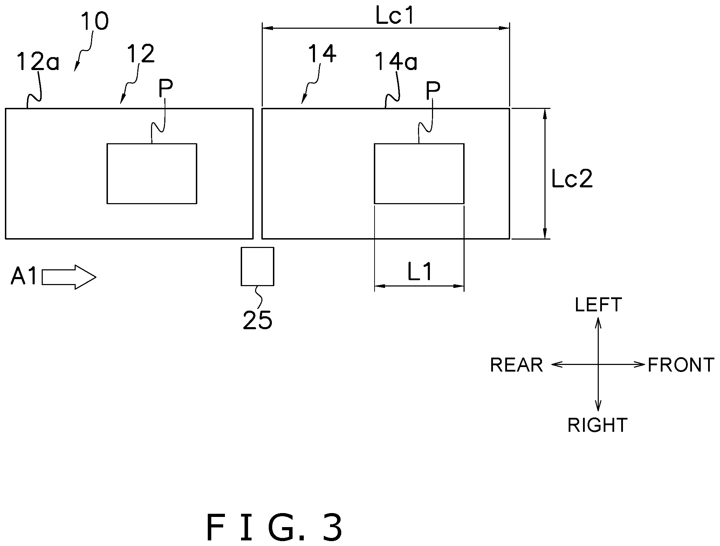

The overall configuration of the weighing apparatus 100 will be described with reference to FIG. 1 to FIG. 3. FIG. 1 is a schematic front view of the weighing apparatus 100 seen from the front. FIG. 2 is a block diagram of the weighing apparatus 100. FIG. 3 is a schematic plan view of main parts of the weighing apparatus 100 seen from above.

The weighing apparatus 100 is a weighing apparatus that weighs an article P while conveying the article P.

As shown in FIG. 1, the weighing apparatus 100 mainly has a conveyance device 10 and a detection device 20. The weighing apparatus 100 also has a control device 80 (see FIG. 2) that controls the operations of the conveyance device 10 and the detection device 20.

It will be noted that the control device 80 has, in addition to the function of controlling the operations of the conveyance device 10 and the detection device 20, the function of determining whether there is a defect in the weighing by the weighing apparatus 100. Moreover, in a case where there is a defect in the weighing by the weighing apparatus 100, the control device 80 has the function of determining candidates for defect factors in the weighing apparatus 100 and outputting the determined candidates for defect factors in the weighing apparatus 100.

The conveyance device 10 receives and conveys the article P, which is supplied from an upstream process not shown in the drawings (e.g., a process to manufacture the article P). Specifically, the conveyance device 10 conveys the article P to a place where its weight is detected by the detection device 20.

The detection device 20 detects the weight of the article P conveyed by the conveyance device 10 and outputs a weigh signal corresponding to the detected weight to the control device 80. The control device 80 calculates a weight W of the article P based on the weigh signal that was output when the detection device 20 detected the weight of the article P. Moreover, the control device 80 determines whether or not the calculated weight W of the article P is within an allowable weight range. What is meant by an expression that "the weight W of the article P being within an allowable weight range" is the weight of the article P is equal to or greater than an allowable minimum weight and equal to or less than an allowable maximum weight.

For example, a sorting device not shown in the drawings is disposed downstream of the weighing apparatus 100 is disposed. The sorting device sorts the article P based on the weight W of the article P calculated by the control device 80. For example, in a case where the weight W of the article P is outside the allowable weight range, the sorting device removes the article P from the conveyance line of the article P.

### (2) Detailed Configuration

The weighing apparatus 100 will be described in detail below.

It will be noted that in the following description expressions such as "front", "rear", "upper", "lower", "right", and "left" may be used when describing directions and positional relationships. Expressions such as "front", "rear", "upper", "lower", "right", and "left" follow the directions indicated by the arrows in the drawings unless otherwise specified.

### (2-1) Conveyance Device

The conveyance device 10 conveys the article P along a conveyance direction A1 (see FIG. 1 and FIG. 3).

The conveyance device 10 includes a first conveyor 12 and a second conveyor 14 as well as a first drive unit 18a and a second drive unit 18b. The first drive unit 18a and the second drive unit 18b are, for example, motors.

In the conveyance device 10, as shown in FIG. 1 and FIG. 3, the first conveyor 12 and the second conveyor 14 are arranged in this order from upstream in the conveyance direction A1 of the article P.

As shown in FIG. 3, among the first conveyor 12 and the second conveyor 14, the first conveyor 12 is disposed upstream in the conveyance direction A1. The first conveyor 12 functions as an intake conveyor that introduces to the weighing apparatus 100 the article P conveyed from the process upstream of the weighing apparatus 100. The first conveyor 12 conveys the article P in the conveyance direction A1 and hands over the article P to the second conveyor 14.

The first conveyor 12 includes a first conveyor belt 12a (see FIG. 1). The first conveyor belt 12a is, for example, a flat belt. The first conveyor belt 12a is entrained about a drive roller 122a and a follower roller 122b, and the first conveyor 12 conveys the article P on the first conveyor belt 12a in the conveyance direction A1 as a result of the first drive unit 18a driving the drive roller 122a.

As shown in FIG. 3, among the first conveyor 12 and the second conveyor 14, the second conveyor 14 is disposed downstream in the conveyance direction A1. The second conveyor 14 receives the article P conveyed by the first conveyor 12 and conveys it. The detection device 20 detects the weight of the article P as it is being conveyed by the second conveyor 14 and outputs the weigh signal. The second conveyor 14 conveys the article P in the conveyance direction A1 and hands over the article P to a process downstream of the weighing apparatus 100 (e.g., the sorting device not shown in the drawings).

The second conveyor 14 includes a second conveyor belt 14a (see FIG. 1). The second conveyor belt 14a is, for example, a flat belt. The second conveyor belt 14a is entrained about rollers 144a and 144b, and the second conveyor 14 conveys the article P on the second conveyor belt 14a in the conveyance direction A1 as a result of the second drive unit 18b driving the roller (drive roller) 144a.

It will be noted that the first conveyor 12 and the second conveyor 14 have a variable conveyance speed. In other words, the motors of the first drive unit 18a and the second drive unit 18b have a variable rotational speed.

### (2-2) Detection Device

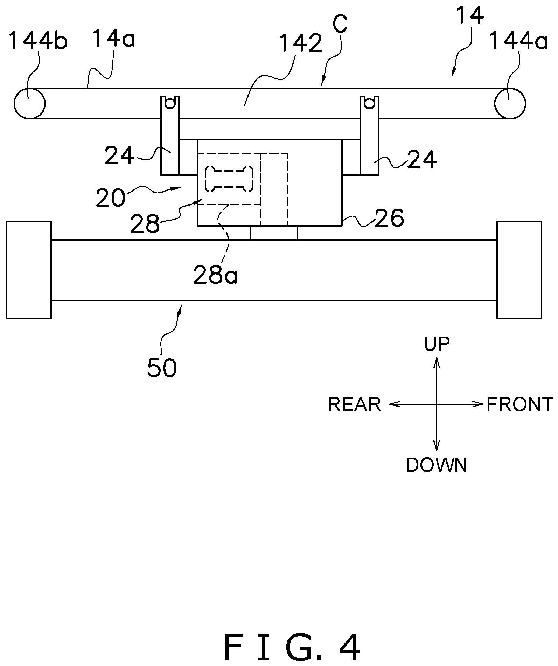

The detection device 20 will be described with further reference to FIG. 4. FIG. 4 is a schematic configuration diagram of the second conveyor 14 of the conveyance device 10 and the detection device 20.

As shown in FIG. 3 and FIG. 4, the detection device 20 mainly has a sensor 25 and a load cell 28 serving as an example of a detection unit (a weight sensor).

The sensor 25 detects that the article P conveyed by the first conveyor 12 has reached the second conveyor 14. The sensor 25 is, for example, a photoelectric sensor. However, the type of the sensor 25 is not limited to a photoelectric sensor and may be any type as long as it is a sensor that can detect the arrival of the article P at the second conveyor 14.

The control device 80 detects the timing when the entire article P is on the second conveyor belt 14a based on the detection result of the sensor 25, a conveyance speed V of the conveyance device 10, and a length L1 of the article P in the conveyance direction A1. The control device 80 calculates the weight W of the article P based on a weigh signal output by the load cell 28 while the entire article P is on the second conveyor belt 14a.

The load cell 28 includes a spring element 28a that becomes deformed in proportion to force acting thereon and a strain gauge (not shown in the drawings) that is adhered to the spring element 28a, converts strain into an electrical signal (this signal is called a weigh signal), and outputs the electrical signal. In short, the load cell 28 sends a weigh signal corresponding to the force acting thereon. The load cell 28 is housed inside a case 26 disposed under the second conveyor 14 (see FIG. 4).

Weight detection by the load cell 28 will be described. In describing weight detection by the load cell 28, details about the structure of the second conveyor 14 of the conveyance device 10 will first be described.

The second conveyor 14 mainly has, in addition to the second conveyor belt 14a, a frame 142 as well as a drive roller 144a and a follower roller 144b (see FIG. 4).

The frame 142 of the second conveyor 14 is supported by brackets 24 that extend upward from the case 26. The case 26, as shown in FIG. 4, is secured to a frame 50 of the weighing apparatus 100.

The drive roller 144a and the follower roller 144b, as shown in FIG. 4, are provided on both ends of the frame 142. The drive roller 144a and the follower roller 144b are supported by the frame 142 so as to be freely rotatable. The second conveyor belt 14a is entrained about the drive roller 144a and the follower roller 144b. The second drive unit 18b drives the drive roller 144a, whereby the second conveyor belt 14a rotates and the second conveyor 14 conveys the article P on the second conveyor belt 14a in the conveyance direction A1.

Because of this structure, the load cell 28 detects the weight of the second conveyor 14 (the force that the second conveyor 14 exerts on the load cell 28), which serves as a conveyance unit, and outputs a weigh signal when the article P is not on the second conveyor belt 14a. It will be noted that, here, the weight of the second conveyor 14 is generally the total weight of the frame 142, the drive roller 144a and the follower roller 144b, and the second conveyor belt 14a. Furthermore, when the second conveyor belt 14a is conveying the article P, the load cell 28 detects the weight of the second conveyor 14 and the weight of the article P on the second conveyor 14 and outputs a weigh signal.

### (2-3) Control Device

The control device 80 controls the operations of each part of the weighing apparatus 100. Furthermore, the control device 80 performs a process to calculate the weight W of the article P based on the weigh signal sent by the detection device 20.

Furthermore, the control device 80 has the function of determining whether there is a defect in the weighing by the weighing apparatus 100. Moreover, the control device 80 has the function of determining candidates for defect factors in the weighing apparatus 100 and outputting the determined candidates for defect factors in the weighing apparatus 100 in a case where there is a defect in the weighing by the weighing apparatus 100.

Although this should not be construed as limiting the disposition of the control device 80, the control device 80 may be installed in a body portion 100a of the weighing apparatus 100. The body portion 100a of the weighing apparatus 100 is disposed on the side of the conveyance device 10 and is provided with an input device 60 and an output device 70 described later.

The control device 80 of this embodiment mainly includes a CPU, a memory including a ROM, a RAM, and/or an auxiliary storage device (e.g., flash memory), and various electronic circuits. The control device 80 controls the operations of each part of the weighing apparatus 100 and performs various processes as a result of the CPU reading and executing programs stored in the memory.

It will be noted that the configuration of the control device 80 described here is merely an example of the configuration of the control device 80, and the same functions as those of the control device 80 of this embodiment may be realized by hardware such as a logic circuit or may be realized by a combination of hardware and software.

Furthermore, the control device 80 may be realized by one device or may be realized by plural devices. For example, the control device 80 may have a control device installed in the body portion 100a and a device installed in a place separate from the body portion 100a and communicably connected to the control device. The control device installed in the body portion 100a and the device outside the body portion 100a may work together to function as the control device 80 described here.

The control device 80 is electrically connected to the first drive unit 18a and the second drive unit 18b of the conveyance device 10 and the sensor 25 and the load cell 28 of the detection device 20.

The control device 80 is also electrically connected to the input device 60 and the output device 70 provided in the body portion 100a (see FIG. 2). The input device 60 receives various types of commands input by an operator of the weighing apparatus 100 and various types of information input by the operator. For example, the input device 60 is a touch panel display. The commands and information input to the input device 60 are sent to the control device 80. The output device 70 is controlled by the control device 80 and outputs various types of information. For example, the output device 70 is a display that displays various types of information. In other words, in this embodiment, a touch panel display functions as the input device 60 and the output device 70.

It will be noted that the input device and the output device are not limited to the device exemplified here. For example, the input device may be a device that receives commands and information sent from a mobile device (not shown in the drawings) operated by the operator or the like of the weighing apparatus 100 or a central control unit (not shown in the drawings) higher than the weighing apparatus 100, or switches provided on the weighing apparatus 100. Furthermore, the output device may be a device that outputs (sends) various types of information to a mobile device (not shown in the drawings) which the operator or the like of the weighing apparatus 100 has or to a central control unit (not shown in the drawings) higher than the weighing apparatus 100.

The memory of the control device 80 includes a storage unit 82 that stores various types of information. Examples of the information stored in the storage unit 82 will be described later.

The CPU of the control device 80 functions as a control unit 84 and an acquisition unit 86 by reading and executing programs stored in the memory.

### (2-4-1) Acquisition Unit

The acquisition unit 86 acquires various types of information input to the input device 60. The various types of information acquired by the acquisition unit 86 are stored in the storage unit 82.

The information acquired by the acquisition unit 86 includes, for example, a prescribed weight Wt of the article P conveyed by the conveyance device 10. The prescribed weight Wt is, in other words, the weight that the article P should normally have (the target weight of the article P).

Furthermore, the information acquired by the acquisition unit 86 includes the length L1 of the article P conveyed by the second conveyor 14. Here, the length L1 of the article P conveyed by the second conveyor 14 is the length of the article P in the conveyance direction A1 in a state in which the article P is conveyed by the second conveyor 14.

Although the prescribed weight Wt of the article P and the length L1 of the article P are each input to the input device 60 in this embodiment, the configuration of the weighing apparatus 100 are not limited to this. For example, the information of the prescribed weight Wt of the article P and the length L1 of the article P may be stored for each type of the article P in the storage unit 82, and the acquisition unit 86 may acquire an identifier that identifies the type of the article P and is input to the input device 60. When the weighing apparatus 100 is configured in this way, the acquisition unit 86 can acquire the prescribed weight Wt of the article P and the length L 1 of the article P by referencing the storage unit 82.

Furthermore, the information acquired by the acquisition unit 86 includes a conveyance speed V at which the article P is conveyed by the conveyance device 10 when the weighing apparatus 100 weighs the article P. It will be noted that the acquisition unit 86 may acquire, as the information of the conveyance speed V at which the article P is conveyed by the conveyance device 10, information with which the conveyance speed V of the article P can be identified (e.g., the rotational speed of the motor of the second drive unit 18b).

### (2-4-2) Control Unit

When the weighing apparatus 100 weighs the article P, the control unit 84 controls the operations of the weighing apparatus 100 based on the commands input to the input device 60 and the information acquired by the acquisition unit 86, such as the prescribed weight Wt of the article P, the length L1 of the article P, and the conveyance speed V at which the article P is conveyed by the conveyance device 10.

For example, when an operation command is input to the input device 60, the control unit 84 controls the operations of the first drive unit 18a and the second drive unit 18b so that the speed at which the article P is conveyed by the first conveyor 12 and the second conveyor 14 becomes the conveyance speed V acquired by the acquisition unit 86.

Furthermore, for example, the control unit 84 calculates the weight W of a given article P based on the weigh signal output by the load cell 28 when that article P is being conveyed by the second conveyor 14. Specifically, the control unit 84 detects the timing when the entire article P is on the second conveyor belt 14a based on the detection result of the sensor 25, the conveyance speed V of the conveyance device 10, and the length L1 of the article P. The control unit 84 calculates the weight W of the article P based on the weigh signal output by the load cell 28 while the entire article P is on the second conveyor belt 14a. The calculation of the weight W of the article P by the control unit 84 will be described later.

Furthermore, for example, the control unit 84 determines whether the weight of the article P it has calculated is within the allowable weight range. For example, the control unit 84 determines whether the weight W of the article P it has calculated is a value between the allowable minimum weight (prescribed weight Wt of article - α) and the allowable maximum weight (prescribed weight Wt of article + β) (α and β are set numerical values). The control unit 84 determines that the article P is an accepted article when the weight W of the article P it has calculated is within the allowable weight range and determines that the article P is a rejected article if the weight W of the article P it has calculated is outside the allowable weight range.

Furthermore, for example, the control unit 84 determines whether there is a defect in the weighing by the weighing apparatus 100. Moreover, in a case where there is a defect in the weighing by the weighing apparatus 100, the control unit 84 determines candidates for defect factors in the weighing apparatus 100 and outputs the candidates for defect factors in the weighing apparatus 100 it has determined.

### (A) Process for Calculating Weight of Article

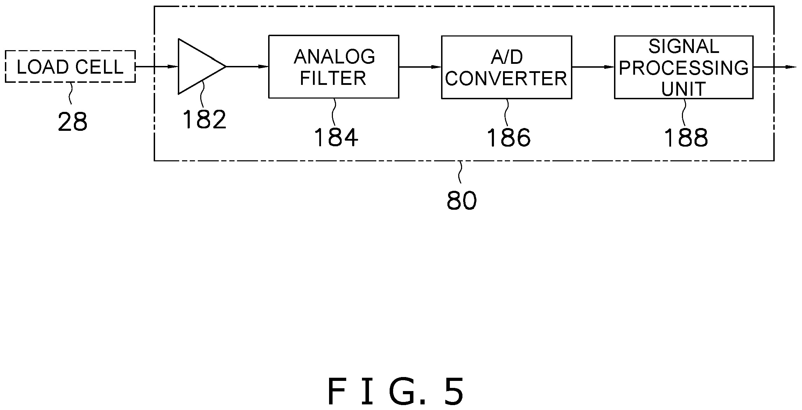

The process by which the control unit 84 calculates the weight W of the article P will be described. First, a configuration of the control device 80 for the weight calculation process will be described with reference to FIG. 5. FIG. 5 is a block diagram of a configuration of the control device 80 for the weight calculation process.

The control device 80 includes an amp 182, an analog filter 184, and an A/D converter 186. Furthermore, the control unit 84 includes a signal processing unit 188 as a functional unit for the process for calculating the weight of the article P.

The amp 182 amplifies the weigh signal input from the load cell 28 and outputs the amplified signal to the analog filter 184. The analog filter 184 removes unwanted highfrequency components from the amplified signal and outputs an analog signal. The A/D converter 186 converts the analog signal output from the analog filter 184 to a digital signal and outputs the digital signal to the signal processing unit 188. The signal processing unit 188 filters the digital signal using a predetermined finite impulse response (FIR) filter (hereinafter simply called a filter). In short, the signal processing unit 188 uses the predetermined filter to filter the weigh signal that has been preprocessed by the amp 182, the analog filter 184, and the A/D converter 186 (hereinafter the weigh signal after being preprocessed will be called the weigh signal of the load cell 28). The control unit 84 calculates the weight W of the article P based on the weigh signal of the load cell 28 filtered by the signal processing unit 188.

It will be noted that, as mentioned above, in a case where the second conveyor belt 14a is conveying the article P, the load cell 28 detects the weight of the second conveyor 14 and the weight of the article P on the second conveyor 14 and outputs a weigh signal. For that reason, if, in a case where the second conveyor belt 14a is conveying the article P, the control unit 84 were to calculate the weight based on the weigh signal from the load cell 28, the control unit 84 would calculate the total weight of the second conveyor 14 and the article P. Therefore, before the control unit 84 actually starts measuring the weight of the article P, the control unit 84 implements a process to derive a zero point based on the weigh signal output by the load cell 28 in a state in which the article P is not on the second conveyor belt 14a. In other words, before the control unit 84 actually starts measuring the weight of the article P, the control unit 84 implements in advance a process to calculate the weight of the second conveyor 14 that should be subtracted from the total weight of the second conveyor 14 and the article P on the second conveyor 14.

It will be noted that the reason the signal processing unit 188 filters the weigh signal of the load cell 28 is the weigh signal of the load cell 28 includes noise caused by the natural vibration of the weighing apparatus 100 (vibration caused by shock when the article P is handed over to the second conveyor 14) and rotational vibration of the motors (e.g., the motor used as the second drive unit 18b) and the rollers (e.g., the drive roller 144a and the follower roller 144b of the second conveyor 14) used by the weighing apparatus 100.

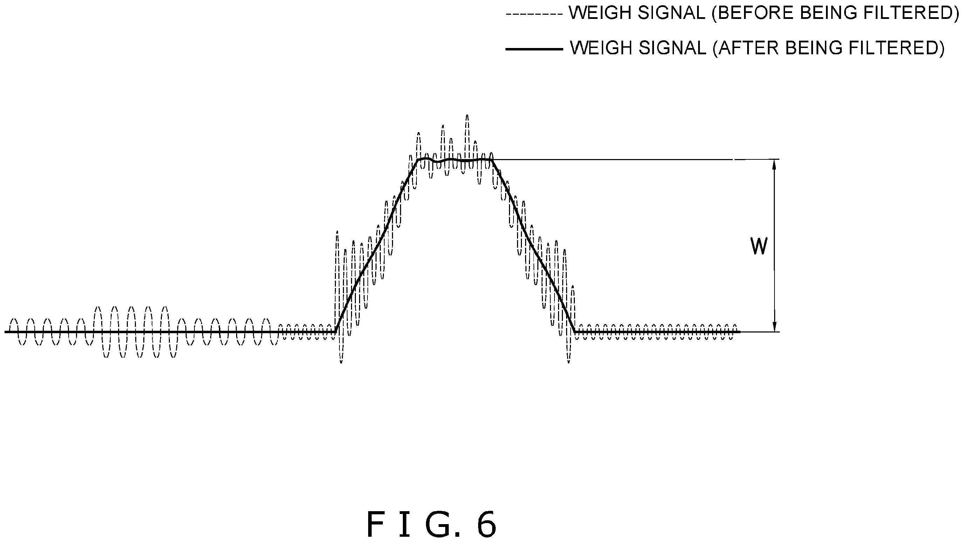

This will be described with reference to FIG. 6. The weigh signal of the load cell 28 is a signal that includes a vibration component with a relatively large amplitude (noise) as indicated by the dashed line in FIG. 6. The weight of the article P cannot be accurately calculated from the weigh signal that includes this vibration component. Therefore, the signal processing unit 188 uses the predetermined filter to filter (reduce the noise in) the weigh signal of the load cell 28 to extract a signal with little noise (generally, a signal representing just the force the article P exerts on the load cell 28) such as indicated by the solid line in FIG. 6.

The control unit 84 calculates the weight W of the article P based on the value of the difference between the weigh signal after being filtered by the signal processing unit 188 and the zero point. Specifically, the control unit 84 calculates the weight W of the article P based on the value of the difference between the weigh signal in the period in which the entire article P is on the second conveyor belt 14a (the weigh signal in the plateau portion of the solid line in FIG. 6) and the weigh signal in the period in which the article P is not on the second conveyor belt 14a.

It will be noted that the frequency of the noise included in the weigh signal of the load cell 28 varies depending on various conditions.

For example, the frequency of the natural vibration of the weighing apparatus 100 is a relatively large frequency of about 20 to 100 Hz. The frequency of the natural vibration varies depending on, for example, a length Lc1 of the second conveyor 14 in the conveyance direction A1 of the conveyance device 10, a length Lc2 of the second conveyor 14 in the direction orthogonal to the conveyance direction A1 of the conveyance device 10 (see FIG. 3), the prescribed weight Wt of the article P, and the length L1 of the article P in the conveyance direction A1.

Furthermore, the frequency of the rotational vibration of the motors and rollers is a frequency of about 10 to 30 Hz. The frequency of the rotational vibration varies depending on, for example, the conveyance speed V of the article P (the conveyance speed of the second conveyor belt 14a), the length Lc1 of the second conveyor 14 in the conveyance direction A1 of the conveyance device 10, the length Lc2 of the second conveyor 14 in the direction orthogonal to the conveyance direction A1 of the conveyance device 10, the diameter of the drive roller 144a and the follower roller 144b, the number of teeth of the drive roller 144a, the number of teeth of the motor used as the second drive unit 18b, the number of teeth of a timing belt 144c of the second conveyor 14, and the perimeter of the second conveyor belt 14a.

For example, the frequency of the vibration of the rollers is calculated by the conveyance speed [m/s] of the second conveyor belt 14a / the roller diameter [m] × π. For example, the frequency of the vibration of the motors is calculated by the frequency of the vibration of the rollers × the number of teeth of the rollers / the number of teeth of the motors. For example, the frequency of the vibration of the timing belt is calculated by the frequency of the vibration of the rollers × the number of teeth of the rollers / the number of teeth of the timing belt. For example, the frequency of the vibration of the second conveyor belt 14a (flat belt) is calculated by the conveyance speed [m/s] of the second conveyor belt 14a / the perimeter [m] of the second conveyor belt 14a.

Furthermore, sometimes the frequency of disturbances such as vibration in the floor of the factory is a relatively small frequency of 10 Hz or less.

Because the frequency of noise included in the weigh signal of the load cell 28 can vary depending on various conditions in this way, the signal processing unit 188 is configured to variably set filters it uses for filtering. In other words, the control device 80 of the weighing apparatus 100 has plural filters with mutually different characteristics that the signal processing unit 188 uses to filter the weigh signal. The reason that the signal processing unit 188 variably sets the filters it uses for filtering is that there is not a single filter that can sufficiently reduce noise in all frequency bands among the filters used by the signal processing unit 188.

It will be noted that the filters settable by the control device 80 include filters that can sufficiently reduce noise equal to or greater than predetermined frequencies. Although this is not intended to be limiting, the plural filters that the control device 80 has include, for example, a filter A that can sufficiently reduce noise equal to or greater than 5 Hz from the weigh signal, a filter B that can sufficiently reduce noise equal to or greater than 10 Hz from the weigh signal, a filter C that can sufficiently reduce noise equal to or greater than 15 Hz from the weigh signal, and a filter D that can sufficiently reduce noise equal to or greater than 20 Hz from the weigh signal. Here, "can sufficiently reduce noise equal to or greater than predetermined frequencies" refers, for example, to a filter that can reduce to a predetermined reduction ratio or less the amplitude of a signal equal to or greater than a predetermined frequency.

Furthermore, the filters settable by the signal processing unit 188 include a combination filter. Here, a combination filter is a filter created by combining a plurality of filters which each forms a base. By using a combination filter to perform filtering, noise with a frequency equal to or greater than a given frequency can be sufficiently (e.g., to 1/10,000 or less) reduced, and also in regard to frequencies smaller than that frequency, noise may be reduced to a relatively great extent the amplitude of a predetermined frequency.

The filters that the signal processing unit 188 uses when the weighing apparatus 100 weighs the article P are, for example, set (selected) by a technician so that noise included in the weigh signal is reduced while the technician performs a test operation. Alternatively, the filters that the signal processing unit 188 uses when the weighing apparatus 100 weighs the article P may be automatically set by the control unit 84 based, for example, on the results of the test operation.

### (B) Diagnostic Process

### (B-1) Overview

The control device 80 acquires the weigh signal output by the load cell 28, determines whether a defect in weighing is occurring in the weighing apparatus 100, and determines and outputs candidates for defect factors. This series of processes is called a diagnostic process.

The diagnostic process performed by the control device 80 will be described.

The main processes in the diagnostic process include a process for determining whether a defect in weighing is occurring in the weighing apparatus 100 and a process for determining and outputting candidates for defect factors in a case where a defect in weighing is occurring. In the control device 80, particularly the control unit 84 determines whether a defect in weighing is occurring in the weighing apparatus 100. Specifically, the control unit 84 determines whether vibration that adversely affects or has the potential to adversely affect the weighing precision of the weighing apparatus 100 exists in the weighing apparatus 100. Furthermore, in the control device 80, in a case where the control unit 84 determines that there is a defect in the weighing by the weighing apparatus 100, the control unit 84 determines candidates for defect factors. In a case where the control unit 84 determines that there is a defect in the weighing apparatus 100, the control unit 84 outputs to the output device 70 the candidates for defect factors it has determined.

It will be noted that defect factors that the control unit 84 is able to determine as candidates include defects (failures, degradation over time, poor maintenance, etc.) in the weighing apparatus 100. Failures in the weighing apparatus 100 include, for example, damage to the rollers 144a and 144b of the second conveyor 14. Degradation of the weighing apparatus 100 over time includes, for example, wear of the second conveyor belt 14a. Poor maintenance of the weighing apparatus 100 includes, for example, improper adjustment of the tension in the second conveyor belt 14a and adhesion of dirt to the second conveyor belt 14a.

Furthermore, defect factors that the control unit 84 is able to determine as candidates may also include improper states of installation of the weighing apparatus 100. Improper states of installation of the weighing apparatus 100 include, for example, a state in which one or more legs 52 (see FIG. 1) of the frame 50 supporting the conveyance device 10 and the detection device 20 do not touch the surface where the weighing apparatus 100 is installed. In other words, improper states of installation of the weighing apparatus 100 include a state in which any of the legs 52 of the frame 50 is not supporting the conveyance device 10 and the detection device 20.

Furthermore, defect factors that the control unit 84 is able to determine as candidates may include defects relating to the installation environment of the weighing apparatus 100. Defects relating to the installation environment of the weighing apparatus 100 include, for example, vibration in the floor in the place where the weighing apparatus 100 is installed. Furthermore, defects relating to the installation environment of the weighing apparatus 100 include, for example, air currents (e.g., strong air currents generated by an air conditioning system, etc.) in the place where the weighing apparatus 100 is installed.

The control device 80 executes the diagnostic process when, for example, a command to diagnose the weighing apparatus 100 is input to the input device 60. Furthermore, the control device 80 may execute the diagnostic process at predetermined timings in addition to, or instead of, the condition of a command to diagnose the weighing apparatus 100 being input to the input device 60. For example, the control device 80 may execute the diagnostic process each time the weighing apparatus 100 is switched on. Furthermore, for example, the control device 80 may execute the diagnostic process each time a command for the weighing apparatus 100 to operate is input to the input device 60.

### (B-2) Specific Example of Diagnostic Process

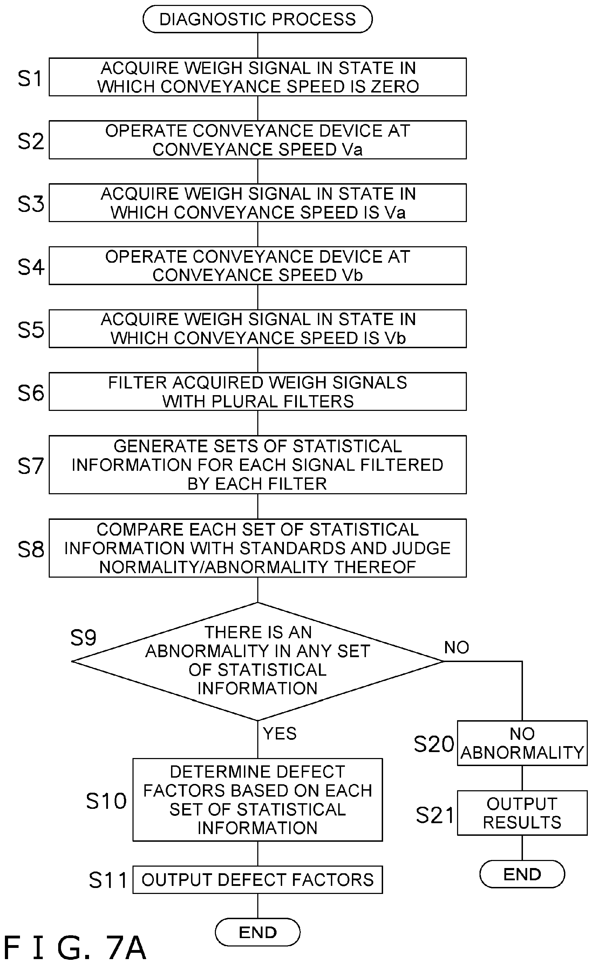

A specific example of the diagnostic process executed by the control device 80 will be described with reference to the flowchart of FIG. 7A.

The control device 80 executes the diagnostic process based, for example, on the flowchart of FIG. 7A when a predetermined condition such as described above (e.g., the condition where a command to diagnose the weighing apparatus 100 is input) is met.

In step S 1, the control device 80 acquires the weigh signal output by the load cell 28 in a predetermined amount of time (e.g., several tens of seconds) in a state in which there is no article P on the second conveyor 14 and the conveyance speed of the second conveyor 14 is zero (i.e., a state in which the second conveyor 14 is stopped). More specifically, the control device 80 acquires the weigh signal that is output by the load cell 28 in the predetermined amount of time in a state in which the conveyance speed of the second conveyor 14 is zero and there is article on the second conveyor 14 and then has been amplified by the amp 182 and processed by the analog filter 184 and the A/D converter 186 (to avoid redundant description, hereinafter this signal will sometimes be called the weigh signal of the load cell 28). The weigh signal of the load cell 28 acquired by the control device 80 is stored in the storage unit 82.

It will be noted that at this time the conveyance device 10 is not operating and the conveyance device 10 produces no vibration, so the load cell 28 detects, for example, vibration in the floor of the factory and disturbances such as air currents blowing against the second conveyor 14. Particularly in a case where the installation state of the weighing apparatus 100 is improper such that any of the legs 52 of the frame 50 is hovering above the floor surface and the weighing apparatus 100 easily shakes, the load cell 28 tends to detect vibration, even relatively small disturbances such as relatively small vibrations in the floor of the factory.

Next, in step S2, the control device 80 operates the second conveyor 14 at a conveyance speed Va [m/s] in a state in which there is no article on the second conveyor 14 (without the article P being supplied to the second conveyor 14). In other words, the control device 80 controls the operation of the second conveyor 14 so as to operate just the second conveyor belt 14a at the conveyance speed Va without the second conveyor 14 conveying an article. It will be noted that at this time the control device 80 may also simultaneously operate the first conveyor 12 at, for example, the conveyance speed Va.

Next, in step S3, the control device 80 acquires the weigh signal output by the load cell 28 in a predetermined amount of time (e.g., several tens of seconds) in a state in which there is no article on the second conveyor 14 and the second conveyor 14 is being operated at the conveyance speed Va. More specifically, the control device 80 acquires the weigh signal that is output by the load cell 28 in the predetermined amount of time in a state in which the second conveyor 14 is being operated at the conveyance speed Va without conveying the article P and then has been amplified by the amp 182 and processed by the analog filter 184 and the A/D converter 186 (to avoid redundant description, hereinafter this signal will sometimes be called the weigh signal of the load cell 28). The weigh signal of the load cell 28 acquired by the control device 80 is stored in the storage unit 82.

Next, in step S4, the control device 80 operates the second conveyor 14 at a conveyance speed Vb [m/s] in a state in which there is no article on the second conveyor 14 (without the article P being supplied to the second conveyor 14). The conveyance speed Vb is a higher speed than the conveyance speed Va. For example, the conveyance speed Vb is twice the conveyance speed Va, although this is not intended to be limiting. In other words, the control device 80 controls the operation of the second conveyor 14 so as to just operate the second conveyor belt 14a at the conveyance speed Vb without the second conveyor 14 conveying an article. It will be noted that at this time the control device 80 may also simultaneously operate the first conveyor 12 at, for example, the conveyance speed Vb.

Next, in step S5, the control device 80 acquires the weigh signal output by the load cell 28 in a predetermined amount of time (e.g., several tens of seconds) in a state in which there is no article P on the second conveyor 14 and the second conveyor 14 is being operated at the conveyance speed Vb. More specifically, the control device 80 acquires the weigh signal that is output by the load cell 28 in the predetermined amount of time in a state in which the second conveyor 14 is being operated at the conveyance speed Vb without conveying the article P and then has been amplified by the amp 182 and processed by the analog filter 184 and the A/D converter 186 (to avoid redundant description, hereinafter this weigh signal will sometimes be called the weigh signal of the load cell 28). The weigh signal of the load cell 28 acquired by the control device 80 is stored in the storage unit 82.

It will be noted that in step S3 and step S5, ideally the load cell 28 does not detect anything because the second conveyor 14 is not conveying an article. However, in reality, the load cell 28 may detect disturbances such as vibration in the floor of the factory and air currents blowing against the second conveyor 14, and also vibration produced by the conveyance device 10.

Next, in step S6, the signal processing unit 188 of the control device 80 filters, with the plural filters, each of the weigh signals of the load cell 28 acquired in step S1, step S3, and step S5. For example, in step S6, the signal processing unit 188 filters, with the four filters A to D, each of the weigh signals of the load cell 28 (three weigh signals of the load cell 28) acquired in step S1, step S3, and step S5. Although this is not intended to be limiting, for example, filter A is a filter that can sufficiently reduce noise of 5 Hz or more, filter B is a filter that can sufficiently reduce noise of 10 Hz or more, filter C is a filter that can sufficiently reduce noise of 15 Hz or more, and filter D is a filter that can sufficiently reduce noise of 20 Hz or more. Consequently, the weigh signals of the load cell 28 processed by filter A generally include only signals with a frequency smaller than 5 Hz. The weigh signals of the load cell 28 processed by filter B generally include only signals with a frequency small than 10 Hz. The weigh signals of the load cell 28 processed by filter C generally include only signals with a frequency smaller than 15 Hz. The weigh signals of the load cell 28 processed by filter D generally include only signals with a frequency smaller than 20 Hz. Here, the signal processing unit 188 processes, with the four filters A to D, each of the three weigh signals of the load cell 28, so a total of twelve filtered signals are obtained. The filtered signals are stored in the storage unit 82.

Next, in step S7, the control unit 84 generates statistical information in regard to each of the plural signals (in this embodiment, the signals in the cases where the conveyance speed is zero (while conveyance is stopped), the conveyance speed is Va, and the conveyance speed is Vb) that have been filtered by each of the plural filters A to D and are stored in the storage unit 82. The statistical information here is, for example, at least one (one type) of the standard deviation, the dispersion, the difference between the maximum value and the minimum value, the maximum value, and the minimum value of each weigh signal after being filtered. Preferably, the statistical information includes at least one of the standard deviation, the dispersion, and the difference between the maximum value and the minimum value of each weigh signal after being filtered. It will be noted that the control unit 84 may generate just one type of statistical information, or may generate plural types of statistical information, for each of the plural weigh signals that have been filtered by each of the plural filters A to D and are stored in the storage unit 82.

Next, in step S8, the control unit 84 compares, with standards for the statistical information that are stored for each of the conveyance speeds and for each of the filters in the storage unit 82, the statistical information generated in regard to each of the plural signals filtered by each of the plural filters A to D.

The process of comparing the statistical information with the standards for the statistical information executed by the control unit 84 will be described by way of a specific example. Here, a case will be supposed where the control unit 84 generates the dispersion and the difference between the maximum value and the minimum value as the statistical information and compares the statistical information with the standards for the statistical information.

It will be noted that, as a premise for performing step S8, combinations of standard values for dispersions and standard values for differences between maximum values and minimum values are stored in the storage unit 82 in regard to combinations of the three types of conveyance speeds (the conveyance speed of zero, the conveyance speed Va, and the conveyance speed Vb) and the four filters (filter A to filter D).

It will be noted that these sets of information stored in the storage unit 82 may be, for example, dispersions and differences between maximum values and minimum values by conveyance speed and by filter calculated from simulations on a computer and/or theoretical calculations. Furthermore, these sets of information stored in the storage unit 82 may be, for example, dispersions and differences between maximum values and minimum values by conveyance speed and by filter obtained by the same method as steps S 1 to S7 using a tester of a weighing apparatus 100 known to have no defects (an apparatus separate from the weighing apparatus 100 to be diagnosed).

Alternatively, these sets of information stored in the storage unit 82 may, for example, be dispersions and differences between maximum values and minimum values by conveyance speed and by filter that is generated from signals obtained by filtering, with each of the plural filters A to D, the weigh signals output by the load cell 28 in regard to each of the plural conveyance speeds in a state in which there is no article P on the second conveyor 14 at the time of a test operation of the weighing apparatus 100 (the weighing apparatus 100 to be diagnosed itself and which is known to have no defects).

Furthermore, for example, dispersions and differences between maximum values and minimum values of the weigh signals obtained by the same method as steps S1 to S7 using the tester of the weighing apparatus 100, for example, may be stored as defaults in the storage unit 82. Additionally, dispersions and differences between maximum values and minimum values of the weigh signals obtained by the same method as steps S1 to S7 at the time of a test operation of the weighing apparatus 100 to be diagnosed may be stored in the storage unit 82 after the test operation.

In step S8, the control unit 84 compares the dispersions and the differences between the maximum values and the minimum values generated from the signals filtered by each filter in regard to each conveyance speed with the combinations of the standard values for the dispersions and the standard values for the differences between the maximum values and the minimum values stored in the storage unit 82 and associated with the corresponding conveyance speeds and the corresponding filters. Then, the control unit 84 determines, in a case where the dispersion generated from the signals filtered by each filter in regard to each conveyance speed is greater by a predetermined value or more than the standard value for the dispersion or in a case where the difference between the maximum value and the minimum value generated from the signals filtered by each filter in regard to each conveyance speed is greater by a predetermined value or more than the standard value for the difference between the maximum value and the minimum value, that there is an abnormality in this set of statistical information (the set of statistical information deviates from the normal value). It will be noted that the control unit 84 may also determine, in a case where the dispersion generated from the signals filtered by each filter in regard to each conveyance speed is greater by the predetermined value or more than the standard value for the dispersion and the difference between the maximum value and the minimum value generated from the signals filtered by each filter in regard to each conveyance speed is greater by the predetermined value or more than the standard value for the difference between the maximum value and the minimum value, that there is an abnormality in this set of statistical information.

It will be noted that, for example, in a case where the statistical information is the maximum value, the control unit 84 may determine, in a case where the maximum value is greater by a predetermined value or more than the standard value, that there is an abnormality in the set of statistical information. Furthermore, for example, in a case where the statistical information is the minimum value, the control unit 84 may determine, in a case where the minimum value is smaller by a predetermined value or more than the standard value, that there is an abnormality in the set of statistical information.

In step S8, the control unit 84 executes this kind of comparison of the statistical information with the standards for the statistical information in regard to each of the combinations of the three types of conveyance speeds, the conveyance speed of zero, the conveyance speed Va, and the conveyance speed Vb, and the four filters, filter A to filter D. In this embodiment, the control unit 84 executes the comparison of the statistical information with the standards for the statistical information in regard to twelve combinations of the conveyance speeds and the filter types.

Next, in step S9, the control unit 84 determines whether there is a set of statistical information in which there is an abnormality in the plural sets of statistical information generated for each of the combinations of the conveyance speeds and the filter types (in this embodiment, in twelve sets of statistical information). If there is a set of statistical information in which there is an abnormality, the diagnostic process proceeds to step S 10, and if there is not a set of statistical information in which there is an abnormality, the diagnostic process proceeds to step S20.

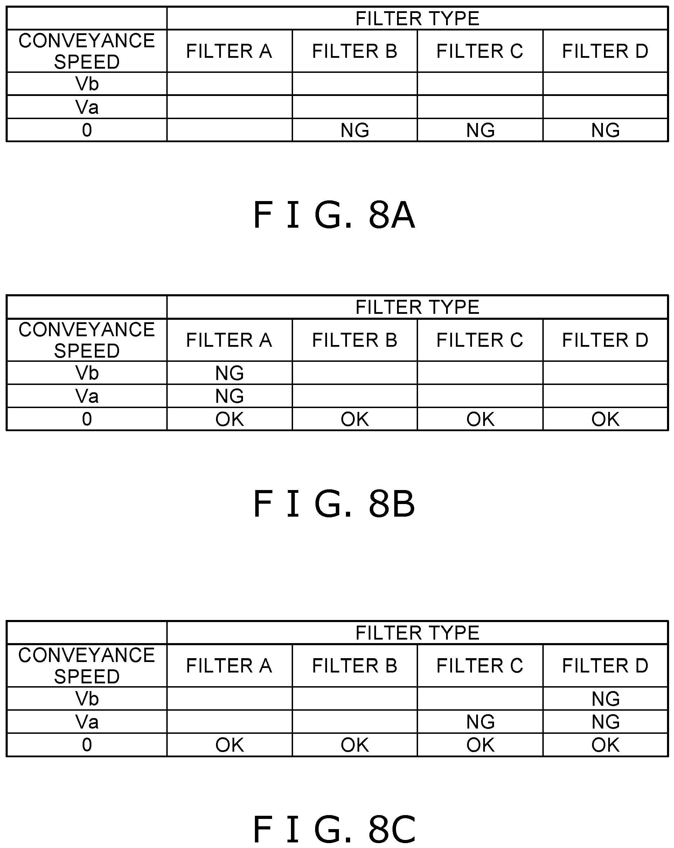

In step S10, the control unit 84 determines candidates for defect factors based on the plural sets of statistical information generated for each of the combinations of the conveyance speeds and the filter types. Specific examples will be described with reference to FIG. 8A to FIG. 8C.

For example, as shown in FIG. 8A, in a case where the control unit 84 determines that the statistical information generated from the signals obtained by filtering, with each of filter B, filter C, and filter D, the weigh signal of the load cell 28 at least in a case where the conveyance speed is zero (a case where the second conveyor 14 is stopped) are abnormal, the control unit 84 determines that a defect relating to the installation environment of the weighing apparatus 100 and an improper installation state of the weighing apparatus 100 are candidates for defect factors in the weighing apparatus 100.

For example, as shown in FIG. 8B, let it be assumed that the control unit 84 determines that the sets of statistical information generated from the signals obtained by filtering, with each of filter B, filter C, and filter D, the weigh signal of the load cell 28 in a case where the conveyance speed is zero are normal. In contrast, let it be assumed that the control unit 84 determines that the sets of statistical information generated from the signals obtained by filtering, with filter A, the weigh signals of the load cell 28 in a case where the conveyance speeds are Va and Vb are abnormal. In this case, the control unit 84 determines that degradation over time or poor maintenance of the second conveyor belt 14a are candidates for defect factors in the weighing apparatus 100. The reason the control unit 84 makes this determination is that it is inferred that there are no problems in the installation environment of the weighing apparatus 100 and the installation state of the weighing apparatus 100 because there are no abnormalities in the sets of statistical information in the case where the conveyance speed is zero, and vibration having a relatively low frequency tends to occur in a case where there is a defect in the second conveyor belt 14a (a flat belt).

For example, as shown in FIG. 8C, let it be assumed that the control unit 84 determines that the sets of statistical information generated from the signals obtained by filtering, with filter B, filter C, and filter D, the weigh signal of the load cell 28 in a case where the conveyance speed is zero are normal. Moreover, let it be assumed that the control unit 84 determines that the set of statistical information generated from the signal obtained by filtering, with filter D, the weigh signal of the load cell 28 in a case where the conveyance speed is Vb is abnormal. Furthermore, let it be assumed that the control unit 84 determines that the sets of statistical information generated from the signals obtained by filtering, with filter C and filter D, the weigh signal of the load cell 28 when the conveyance speed is Va are abnormal. In this case, the control unit 84 determines that damage to the rollers 144a and 144b or damage to the drive second drive unit 18b are candidates for defect factors in the weighing apparatus 100. The reason the control unit 84 makes this determination is that it is inferred that there are no problems in the installation environment of the weighing apparatus 100 or the installation state of the weighing apparatus 100 because there are no abnormalities in the sets of statistical information in a case where the conveyance speed is zero, and vibrations having a relatively low frequency tend to occur in a case where there is a defect in the rollers 144a and 144b or the second drive unit 18b.

It will be noted that the motor serving as the second drive unit 18b may have a function of detecting damage to itself and outputting the detection result to the control device 80. In this case, if there is a problem in the second drive unit 18b, the abnormality in the second drive unit 18b is reported to the control device 80. For that reason, in this case, even if results such as those in FIG. 8C are obtained, the control unit 84 may exclude damage to the second drive unit 18b from the candidates for defect factors in the weighing apparatus 100 if there is no report of an abnormality from the second drive unit 18b.

When the determination of defect factors ends in step S10, the control unit 84 outputs to the output device 70 the candidates for defect factors in the weighing apparatus 100 it determined in step S10 (step S11). For example, the control unit 84 displays, on a display serving as the output device 70, the candidates for defect factors in the weighing apparatus 100 it determined in step S10. In another example, the control unit 84 may send, to a mobile device or the like operated by the operator or the like of the weighing apparatus 100, information about the candidates for defect factors in the weighing apparatus 100 it determined in step S10.

In step S20, the control unit 84 determines that there are no defects in the weighing apparatus 100. Then, in step S21, the control unit 84 outputs to the output device 70 an indication that there are no defects in the weighing apparatus 100.

It will be noted that the diagnostic process described above is merely an example and can be appropriately changed.

For example, the order of step S1 to step S5 can be appropriately changed. For example, step S2 and step S3 may be executed first, followed by step S4 and step S5 and finally step S1. Alternatively, step S4 and step S5 may be executed first, followed by step S2 and step S3 and finally step S1.

Furthermore, in the flowchart of FIG. 7A, the filtering of the weigh signals of the load cell 28 acquired in steps S1, S3, and S5 is performed in one go in step S6, but the filtering is not limited to this. For example, the signal processing unit 188 may perform filtering right after the weigh signal of the load cell 28 is acquired in each of steps S1, S3, and S5. Furthermore, the process of acquiring the sets of statistical information of step S7 may also be performed right after the weigh signals of the load cell 28 are each filtered.

Furthermore, in the above embodiment, the determination result indicating that there are no defects is output to the output device 70 in step S21 even in a case where there are no defects in the weighing apparatus 100, but the diagnostic process is not limited to this aspect. For example, the processes of step S20 and step S21 may also be omitted.

Furthermore, in the flowchart of FIG. 7A, the weighing apparatus 100 only changes the conveyance speed in three stages, zero, Va, and Vb, but the weighing apparatus 100 is not limited to this and may also change the conveyance speed in four or more stages. By changing the conveyance speed in multiple stages, it becomes easier to more accurately determine candidates for defect factors from numerous defect factors.

Furthermore, in the above description, the weighing apparatus 100 uses four types of filters in the diagnostic process, but the number of filter types is not limited to this, and the weighing apparatus 100 may also use two types, three types, or five or more types of filters to filter the weigh signals of the load cell 28.

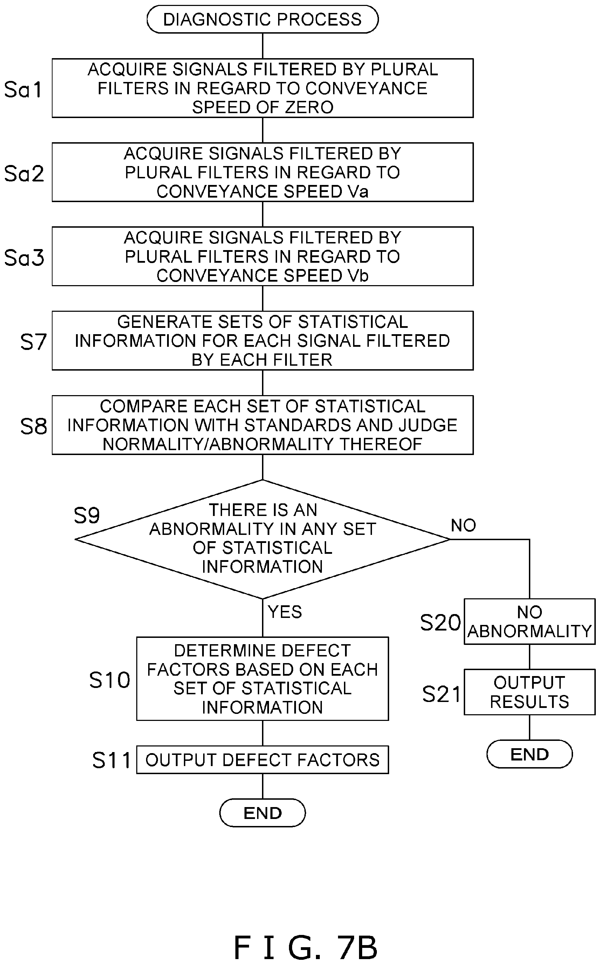

Moreover, in the flowchart described with reference to FIG. 7A, the control device 80 filters, with the plural filters A to D, one weigh signal when the conveyance speed is zero, filters, with the plural filters A to D, one weigh signal when the conveyance speed is Va, and filters, with the plural filters A to D, one weigh signal when the conveyance speed is Vb. However, the control device 80 is not limited to this and may, as shown in FIG. 7B, directly filter, with any of the plural filters A to D, the weigh signals of the load cell 28 acquired when the conveyance speed is zero, Va, and Vb. In other words, the control device 80 may simultaneously perform step S1 and step S6 in FIG. 7Aas step S1a, simultaneously perform step S2, step S3, and step S6 in FIG. 7A as step S2a, and simultaneously perform step S4, step S5, and step S6 in FIG. 7A as step S3a. It will be noted that processes from step S7 on in FIG. 7B are the same as those in FIG. 7A, so description thereof will be omitted.

### (3) Characteristics

(3-1)
The weighing apparatus 100 of the above embodiment measures the weight of the article P while conveying the article P. The weighing apparatus 100 includes the second conveyor 14 serving as an example of a conveyance unit that conveys the article P, the load cell 28 serving as an example of a detection unit, and the control unit 84. The second conveyor 14 has a variable conveyance speed. The load cell 28 detects the weight of the second conveyor 14 or, in a case where the second conveyor 14 is conveying the article P, the weight of the second conveyor 14 and the weight of the article P on the second conveyor 14 and outputs a weigh signal. The control unit 84 generates statistical information from the weigh signals output by the load cell 28 in a state in which there is no article on the second conveyor 14 in regard to each of the plural conveyance speeds. The control unit 84 determines and outputs candidates for defect factors based on the statistical information for each of the conveyance speeds.

In this weighing apparatus 100, as candidates for defect factors are determined based on the statistical information obtained in regard to the plural conveyance speeds Va and Vb, candidates for defect factors can be accurately inferred in a case where a defect is occurring in the weighing. For that reason, a worker maintaining the weighing apparatus 100 can eliminate the defect in a short amount of time.

(3-2)
In the weighing apparatus 100 of the above embodiment, the statistical information generated by the control unit 84 include statistical information generated from the weigh signal output by the load cell 28 in a state in which there is no article on the second conveyor 14 in a case where the conveyance speed is zero.

In this weighing apparatus 100, candidates for defect factors in the weighing apparatus 100 are determined based on the statistical information obtained in a case where the conveyance speed is zero, that is, while the second conveyor 14 is stopped. Therefore, candidates for defect factors can be inferred particularly accurately in a case where a defect is occurring in the weighing. For that reason, a worker maintaining the weighing apparatus 100 can eliminate the defect in a short amount of time.

(3-3)
In the weighing apparatus 100 of the above embodiment, the defect factors include at least one of defect factors relating to the installation state of the weighing apparatus 100 and defect factors relating to the installation environment of the weighing apparatus 100.

In this weighing apparatus 100, the potential for not only defects in constituent parts of the weighing apparatus 100 but also other types of defects can be detected, and the amount of time that a worker maintaining the weighing apparatus 100 needs to identify the cause of a defect can be shortened.

(3-4)
In the weighing apparatus 100 of the above embodiment, the control unit 84 has plural filters with mutually different characteristics which are configured to be used to filter the weigh signals. The control unit 84 generates the statistical information from signals obtained by filtering, with each of the plural filters, the weigh signals output by the load cell 28 in a state in which there is no article on the second conveyor 14 in regard to each of the plural conveyance speeds (in this embodiment, the conveyance speed of zero, the conveyance speed Va, and the conveyance speed Vb). For example, in the above embodiment, the control unit 84 generates the statistical information from signals obtained by filtering, with each of the four types of filters A to D, the weigh signals output by the load cell 28 in a state in which there is no article on the second conveyor 14 in regard to each of the plural conveyance speeds. The control unit 84 determines and outputs the candidates for defect factors based on the statistical information for each of the conveyance speeds and for each of the filters.

In this weighing apparatus 100, as candidates for defect factors are determined using the statistical information obtained from signals obtained by processing signals with different filters, candidates for defect factors can be accurately inferred in a case where a defect is occurring in the weighing. For that reason, a worker maintaining the weighing apparatus 100 can eliminate the defect in a short amount of time.

(3-5)
The weighing apparatus 100 of the above embodiment has the storage unit 82. In the storage unit 82, standards for the statistical information are stored for each of the conveyance speeds and for each of the filters. The control unit 84 determines and outputs the candidates for defect factors based on results of a comparison of the generated statistical information for each of the conveyance speeds and for each of the filters with the standards for the corresponding conveyance speeds and filters stored in the storage unit 82.

In this weighing apparatus 100, candidates for defect factors can be accurately inferred by comparing the generated statistical information with the standards.

(3-6)
In the weighing apparatus 100 of the above embodiment, the statistical information generated from signals obtained by filtering, with each of the plural filters, the weigh signal output by the load cell 28 in a state in which there is no article on the second conveyor 14 in regard to each of the plural conveyance speeds at the time of a test operation of the weighing apparatus 100 may be stored as the standards in the storage unit 82.

In this weighing apparatus 100, the statistical information obtained at the time of a test operation of the weighing apparatus 100 are used as the standards, so candidates for defect factors can be inferred based on characteristics unique to each weighing apparatus 100.

(3-7)
In the weighing apparatus 100 of the above embodiment, the statistical information includes at least one of standard deviation, dispersion, the difference between a maximum value and a minimum value, a maximum value, and a minimum value.

### (4) Example Modifications

### (4-1) Example Modification A

In the above embodiment, the statistical information generated from the weigh signals output by the load cell 28 in a state in which the conveyance speed is zero (i.e., the second conveyor 14 is stopped) and there is no article on the second conveyor 14 are utilized in the diagnostic process, but the statistical information utilized in the diagnostic process are not limited to this.

In other words, the statistical information utilized in the diagnostic process may also be just the statistical information generated from the weigh signals output by the load cell 28 in a state in which the second conveyor 14 is operating and there is no article on the second conveyor 14.

It will be noted that in a case where a defect is occurring in the weighing due to a defect relating to the installation environment of the weighing apparatus 100 and an improper installation state of the weighing apparatus 100, there will not be a large difference in the vibration component affecting weighing even when the conveyance speed is changed. For that reason, by observing such phenomena, it can be determined that defects relating to the installation environment of the weighing apparatus 100 and an improper installation state of the weighing apparatus 100 are candidates for defect factors even without using the statistical information generated from the weigh signals output by the load cell 28 in a state in which the conveyance speed is zero and there is no article on the second conveyor 14.

### (4-2) Example Modification B

In the above embodiment, at the time of the diagnostic process, the conveyance speed of the second conveyor 14 is varied between the conveyance speed Va and the conveyance speed Vb and the statistical information generated from the weigh signals output by the load cell 28 in a state in which there is no article on the second conveyor 14 in regard to each of the conveyance speeds Va and Vb are used in the diagnostic process. However, the statistical information used in the diagnostic process are not limited to this, and in the diagnostic process just the statistical information generated from the weigh signals of the load cell 28 when the conveyance speed of the second conveyor 14 is zero and the statistical information generated from the weigh signals of the load cell 28 when the conveyance speed of the second conveyor 14 is the conveyance speed Va may also be used. However, in order to accurately determine candidates for defect factors, it is preferred to vary the conveyance speed at the time of operation of the second conveyor 14 in two stages or more and use the statistical information generated from the weigh signals output by the load cell 28 in a state in which there is no article on the second conveyor 14 in regard to each of the conveyance speeds.

### (4-3) Example Modification C

In the above embodiment, an example is described where plural filters are utilized at the time of the diagnostic process, but the number of filters is not limited to this, and just one filter may be used in the diagnostic process. Even in a case such as this, the statistical information can be generated from the weigh signals output by the load cell 28 in a state in which there is no article on the second conveyor 14 in regard to each of the plural conveyance speeds, and candidates for defect factors can be determined based on the statistical information for each of the conveyance speeds.

For example, the frequency of vibration of the rollers 144a and 144b of the second conveyor 14 and the frequency of vibration of the second conveyor belt 14a vary depending on the conveyance speed of the second conveyor 14. For that reason, in a case where a defect is occurring in the rollers 144a and 144b and/or the second conveyor belt 14a of the second conveyor 14, even in a case where just one filter is used, depending on the conveyance speed of the second conveyor 14, vibration is strongly detected in the signals after being filtered or vibration is seldom detected in the signals after being filtered. By observing such phenomena, candidates for defect factors can be determined even using just one type of filter.

Furthermore, the control unit 84 need not utilize filters in the diagnostic process. For example, the control unit 84 may implement a frequency analysis on the weigh signals output by the load cell 28 in a state in which no article is on the second conveyor 14 in regard to each of the plural conveyance speeds, generate the statistical information for each frequency band, and determine and output candidates for defect factors based on the statistical information it has generated.

### (4-4) Example Modification D

The weighing apparatus 100 has the conveyance device 10, the detection device 20, and the control device 80, but the weighing apparatus 100 may also be an apparatus having configurations other than these. For example, in the above embodiment, an example is described where a sorting device separate from the weighing apparatus 100 is disposed downstream of the weighing apparatus 100, but the weighing apparatus 100 may also have a sorting mechanism that sorts the articles P based on the weighing results of the articles P.

### (4-5) Example Modification E

In the above embodiment, a FIR filter was described as an example of the filter, but the filter type is not limited to a FIR filter and may be another type of filter capable of filtering the weigh signals.

### (4-6) Example Modification F

In the above embodiment, the weighing apparatus 100 including the load cell 28 having a strain gauge as a detection unit (weight sensor) is described. However, the type of detection unit that the weighing apparatus has is not limited to a load cell using a strain gauge. For example, the load cell 28 may also be a hydraulic load cell or a pneumatic load cell. Furthermore, the detection unit may also be a weigh sensor other than a load cell type, such as a tuning fork vibration type of weight sensor, an electromagnetic balance type of weight sensor, or a capacitive type of weight sensor.

### Industrial Applicability

The present invention can be widely applied to weighing apparatus that weigh an article as it is being conveyed, and is therefore useful.

### Reference Signs List

- 14: Second Conveyor (Conveyance Unit)
- 28: Load Cell (Detection Unit)
- 82: Storage Unit
- 84: Control Unit
- 100: Weighing Apparatus
- A: First Filter (Filter)
- B: Second Filter (Filter)
- C: Third Filter (Filter)
- D: Fourth Filter (Filter)
- V: Conveyance Speed

### Citation List

### Patent Literature

Patent Document 1: JP-A No. 2020-148589

## Claims

1. A weighing apparatus (100) configured to measure the weight of an article while conveying the article, the weighing apparatus comprising:
a conveyance unit (14) configured to convey the article and having a variable conveyance speed;
a detection unit (28) configured to detect a weight of the conveyance unit or, in a case where the conveyance unit is conveying the article, a weight of the conveyance unit and a weight of the article on the conveyance unit, the detection unit configured to output a weigh signal; and **characterised by**:
a control unit (84) configured to generate statistical information from the weigh signals output by the detection unit in a state in which there is no article on the conveyance unit in regard to each of a plurality of the conveyance speeds, the control unit configured to determine and output candidates for defect factors based on the statistical information for each of the conveyance speeds.

2. The weighing apparatus (100) of claim 1, wherein the statistical information generated by the control unit include statistical information generated from the weigh signal output by the detection unit in a state in which there is no article on the conveyance unit in a case where the conveyance speed is zero.

3. The weighing apparatus (100) of claim 2, wherein the defect factors include at least one of defect factors relating to the installation state of the weighing apparatus and defect factors relating to the installation environment of the weighing apparatus.

4. The weighing apparatus (100) of any one of claims 1 to 3, wherein
the control unit has a plurality of filters (A, B, C, D) with mutually different characteristics which are configured to be used to filter the weigh signals, and
the control unit is configured to generate the statistical information from signals obtained by filtering, with each of the plural filters, the weigh signals output by the detection unit in a state in which there is no article on the conveyance unit in regard to each of a plurality of the conveyance speeds and determine and the control unit is configured to output the candidates for defect factors based on the statistical information for each of the conveyance speeds and for each of the filters.

5. The weighing apparatus (100) of claim 4, further comprising a storage unit (82) in which standards for the statistical information are stored for each of the conveyance speeds and for each of the filters, wherein
the control unit is configured to determine and output the candidates for defect factors based on results of a comparison of the generated statistical information for each of the conveyance speeds and for each of the filters with the standards for the corresponding conveyance speeds and filters stored in the storage unit.

6. The weighing apparatus (100) of claim 5, wherein the statistical information generated from signals obtained by filtering, with each of the plural filters, the weigh signals output by the detection unit in a state in which there is no article on the conveyance unit in regard to each of a plurality of the conveyance speeds at the time of a test operation of the weighing apparatus are stored as the standards in the storage unit.

7. The weighing apparatus (100) of any one of claims 1 to 6, wherein the statistical information includes at least one of standard deviation, dispersion, a difference between a maximum value and a minimum value, a maximum value, and a minimum value.

## Patentansprüche

1. Wiegevorrichtung (100), die konfiguriert ist, das Gewicht eines Artikels zu messen, während sie den Artikel befördert, wobei die Wiegevorrichtung aufweist:
eine Fördereinheit (14), die konfiguriert ist, den Artikel zu fördern, und eine variable Fördergeschwindigkeit aufweist;
eine Erfassungseinheit (28), die konfiguriert ist, ein Gewicht der Fördereinheit oder, in einem Fall, in dem die Fördereinheit den Artikel befördert, ein Gewicht der Fördereinheit und ein Gewicht des Artikels auf der Fördereinheit zu erfassen, wobei die Erfassungseinheit konfiguriert ist, ein Wiegesignal auszugeben; und **gekennzeichnet durch**:
eine Steuereinheit (84), die konfiguriert ist, statistische Informationen aus den Wiegesignalen, die von der Erfassungseinheit in einem Zustand ausgegeben werden, in dem sich kein Artikel auf der Fördereinheit befindet, in Bezug auf jede von mehreren Fördergeschwindigkeiten zu erzeugen, wobei die Steuereinheit konfiguriert ist, Kandidaten für Fehlerfaktoren basierend auf den statistischen Informationen für jede der Fördergeschwindigkeiten zu bestimmen und auszugeben.

2. Wiegevorrichtung (100) nach Anspruch 1, wobei die von der Steuereinheit erzeugten statistischen Informationen statistische Informationen umfassen, die aus dem Wiegesignal erzeugt werden, das von der Erfassungseinheit in einem Zustand ausgegeben wird, in dem sich kein Artikel auf der Fördereinheit befindet, wenn die Fördergeschwindigkeit Null ist.

3. Wiegevorrichtung (100) nach Anspruch 2, wobei die Fehlerfaktoren mindestens einen von Fehlerfaktoren, die sich auf den Installationszustand der Wiegevorrichtung beziehen, und Fehlerfaktoren umfassen, die sich auf die Installationsumgebung der Wiegevorrichtung beziehen.

4. Wiegevorrichtung (100) nach einem der Ansprüche 1 bis 3, wobei
die Steuereinheit mehrere Filter (A, B, C, D) mit zueinander unterschiedlichen Charakteristiken aufweist, die konfiguriert sind, verwendet zu werden, um die Wiegesignale zu filtern, und
die Steuereinheit konfiguriert ist, die statistischen Informationen aus Signalen zu erzeugen, die durch Filtern mit jedem der mehreren Filter der Wiegesignale erhalten werden, die von der Erfassungseinheit in einem Zustand ausgegeben werden, in dem sich kein Artikel auf der Fördereinheit befindet, in Bezug auf jede der mehreren Fördergeschwindigkeiten, und zu bestimmen, und die Steuereinheit konfiguriert ist, die Kandidaten für Fehlerfaktoren basierend auf den statistischen Informationen für jede der Fördergeschwindigkeiten und für jeden der Filter auszugeben.

5. Wiegevorrichtung (100) nach Anspruch 4, die ferner eine Speichereinheit (82) aufweist, in der Standards für die statistischen Informationen für jede der Fördergeschwindigkeiten und für jeden der Filter gespeichert sind, wobei die Steuereinheit konfiguriert ist, die Kandidaten für Fehlerfaktoren basierend auf Ergebnissen eines Vergleichs der erzeugten statistischen Informationen für jede der Fördergeschwindigkeiten und für jeden der Filter mit den Standards für die entsprechenden Fördergeschwindigkeiten und Filter, die in der Speichereinheit gespeichert sind, zu bestimmen und auszugeben.

6. Wiegevorrichtung (100) nach Anspruch 5, wobei die statistischen Informationen, die aus Signalen erzeugt werden, die durch Filtern mit jedem der mehreren Filter der Wiegesignale, die von der Erfassungseinheit in einem Zustand ausgegeben werden, in dem sich kein Artikel auf der Fördereinheit befindet, in Bezug auf jede von mehreren Fördergeschwindigkeiten zum Zeitpunkt eines Testbetriebs der Wiegevorrichtung erhalten werden, als die Standards in der Speichereinheit gespeichert werden.

7. Wiegevorrichtung (100) nach einem der Ansprüche 1 bis 6, wobei die statistischen Informationen mindestens eine Standardabweichung, eine Streuung, eine Differenz zwischen einem Maximalwert und einem Minimalwert, einen Maximalwert und einen Minimalwert umfassen.

## Revendications

1. Appareil de pesage (100) configuré pour mesurer le poids d'un article tout en transportant l'article, l'appareil de pesage comprenant :
un appareil de transport (14) configuré pour transporter l'article et présentant une vitesse de transport variable ;
un module de détection (28) configuré pour détecter un poids de l'appareil de transport, ou, dans le cas où l'appareil de transport est en train de transporter l'article, un poids de l'appareil de transport et un poids de l'article sur l'appareil de transport, le module de détection étant configuré pour émettre un signal de pesée ; et **caractérisé par** :
un module de commande (84) configuré pour générer des données statistiques d'après les signaux de pesée émis par le module de détection dans un état dans lequel il n'y a aucun article sur l'appareil de transport à l'égard de chacune d'une pluralité des vitesses de transport, le module de commande étant configuré pour déterminer et produire des candidats pour des facteurs de défaut en fonction des données statistiques pour chacune des vitesses de transport.

2. Appareil de pesage (100) selon la revendication 1, les données statistiques générées par le module de commande comprenant des données statistiques générées par le signal de pesée émis par le module de détection, dans un état dans lequel il n'y a aucun article sur l'appareil de transport dans un cas où la vitesse de transport est nulle.

3. Appareil de pesage (100) selon la revendication 2, les facteurs de défaut comprenant au moins un de facteurs de défaut relatifs à l'état d'installation de l'appareil de pesage, et de facteurs de défaut relatifs au milieu d'installation de l'appareil de pesage.

4. Appareil de pesage (100) selon une quelconque des revendications 1 à 3,
le module de commande possédant une pluralité de filtres (A, B, C, D) présentant des caractéristiques mutuellement différentes, configurées pour être utilisées pour filtrer les signaux de pesée, et
le module de commande étant configuré pour générer les données statistiques d'après des signaux obtenus par le filtrage, à l'aide de chacun de la pluralité de filtres, des signaux de pesée émis par le module de détection dans un état dans lequel il n'y a aucun article sur l'appareil de transport à l'égard de chacune de la pluralité des vitesses de transport, et déterminer, et le module de commande étant configuré pour produire des candidats pour des facteurs de défaut d'après les données statistiques pour chacune des vitesses de transport et pour chacun des filtres.

5. Appareil de pesage (100) selon la revendication 4, comprenant en outre une unité de stockage (82) dans laquelle sont stockés, pour chacune des vitesses de transport et pour chacun des filtres, des critères relatifs aux données statistiques,
le module de commande étant configuré pour établir et produire les candidats pour des facteurs de défaut en fonction des résultats d'une comparaison des données statistiques générées pour chacune des vitesses de transport et pour chacun des filtres avec les critères relatifs aux vitesses de transport et aux filtres correspondants placés dans l'unité de stockage.

6. Appareil de pesage (100) selon la revendication 5, les données statistiques générées à partir de signaux obtenus par le filtrage, à l'aide de chaque filtre de la pluralité de filtres, des signaux de pesée émis par le module de détection dans un état dans lequel il n'y a aucun article sur l'appareil de transport à l'égard de chacune d'une pluralité des vitesses de transport lors d'une opération d'essai de l'appareil de pesage, étant stockées en tant que critères dans l'unité de stockage.

7. Appareil de pesage (100) selon une quelconque des revendication 1 à 6, les données statistiques comprenant au moins une d'un écart type, d'une dispersion, d'une différence entre une valeur maximale et une valeur minimale, d'une valeur maximale, et d'une valeur minimale.
